# EUROPÄISCHE PATENTSCHRIFT

(11) **EP 2 165 402 B1**
(45) Veröffentlichungstag und Bekanntmachung des Hinweises auf die Patenterteilung: **20.04.2011**
(21) Anmeldenummer: 08750329.8
(22) Anmeldetag: 16.05.2008
(51) Int. Cl.: H02J 7/00

(54) **VORRICHTUNG, INSBESONDERE LADEGERÄTVORRICHTUNG, ZUM LADEN EINES AKKUMULATORS**
DEVICE, IN PARTICULAR CHARGING DEVICE FOR CHARGING AN ACCUMULATOR
DISPOSITIF, NOTAMMENT DISPOSITIF CHARGEUR POUR CHARGER UN ACCUMULATEUR

(30) Priorität: 06.07.2007 DE 102007031568
(43) Veröffentlichungstag der Anmeldung: 24.03.2010
(73) Patentinhaber: Robert Bosch GmbH, 70442 Stuttgart (DE)
(72) Erfinder: OSSWALD, Alexander, 70599 Stuttgart (DE); GLAUNING, Rainer, 72631 Aichtal-Groetzingen (DE)
(86) Internationale Anmeldenummer: PCT/EP2008/056048
(87) Internationale Veröffentlichungsnummer: WO 2009/007162

(56) Entgegenhaltungen:
- US-A1- 2005 212 484
- US-B1- 6 204 634
- US-B1- 6 291 973

## Beschreibung

### Stand der Technik

Die Erfindung betrifft eine Vorrichtung, insbesondere eine Ladegerätvorrichtung, zum Laden eines Akkumulators, mit einer Ladestromversorgungseinheit, die in mehreren Lademodi betreibbar ist, wobei der jeweilige Lademodus von einem Bediener auswählbar ist, und mit einer für mindestens einen der Lademodi vorgesehenen Entladevorrichtung.

Eine derartige Vorrichtung ist bereits aus der DE 101 07 619 A 1 bekannt. Dabei handelt es sich um ein mikrocontrollergesteuertes Ladegerät, bei dem der Benutzer vor Beginn der Ladung anhand eines auf einem Display angezeigten Menüs zwischen mehreren Ladefunktionen wählen kann. Beispielsweise wird in einem Standardlademodus der Akkumulator zuerst vollständig entladen, und erst dann komplett aufgeladen. Ein Lademodus kann vollständig oder teilweise durch eine oder mehrere Entlademaßnahmen gebildet sein. Andererseits sind auch Lademodi ohne irgendeine Entlademaßnahme vorgesehen.

Aus der DE 691 23 277 T2 ist ein Batterieladesystem bekannt, bei dem eine in mindestens zwei verschiedenen Lademodi betreibbare Ladevorrichtung mit einem Handy verbunden ist, in dem sich ein zu ladender Akkumulator befindet, wobei die Lademodi vom Handy aus manuell auswählbar sind. Im Handy kann eine Einrichtung zum Erfassen des Ladezustands des Akkus vorgesehen sein, so dass abhängig vom erfassten Ladezustand ein zugeordneter Lademodus automatisch aktiviert wird. Insbesondere wird ein Lademodus für langsameres Laden immer dann automatisch aktiviert, wenn der Ladezustand unter einen Schwellenwert fällt Diese automatische Auswahl und Aktivierung eines Lademodus kann durch die manuelle Auswahl vom Handy aus überspielt werden.

Die Offenlegungsschrift DE 10 2005 020 356 A1 beschreibt eine Vorrichtung, insbesondere eine Ladegerätvorrichtung, mit einer Messeinheit zur Erfassung von mindestens einer Batteriekenngröße, die insbesondere von der Anzahl der zurückliegenden Lade-Entlade-Zyklen abhängt und dadurch eine Alterung der Batterie widerspiegelt. Dadurch kann mittels einer Recheneinheit ein alterungsspezifischer Lademodus bestimmt werden, der der entsprechenden, aktuellen Alterungsklasse der Batterie zugeordnet ist. Es kann eine Einstelleinheit vorgesehen werden, um den ermittelten, hinsichtlich der Alterung der jeweiligen Batterie individuell optimierten Lademodus manuell einzustellen und die Batterie dementsprechend aufzuladen.

Aus US 2005/0212484 A1 ist ein System zum Laden einer Batterie bekannt, bei dem die Batterie abhängig vom Ladezustand aufgeladen oder entladen wird.

Aus US 6,291,973 B1 ist ein Ladegerät bekannt, bei dem eine Bedienperson ein direktes Aufladen oder erst ein Entladen und anschließen ein Aufladen der Batterie auswählen kann.

Aus US 6,204,634 B1 ist ein adaptives Ladeverfahren für Liziumbatterien bekannt, bei dem das Ladeverfahren abhängig von der vorliegenden Spannung der Batterie durchgeführt wird. Am Ende des Ladeverfahrens wird die Batterie zyklisch entladen und wieder aufgeladen.

Die bisherigen Lademodi sind betriebsorientiert. Es hat sich jedoch herausgestellt, dass die bisherigen, hinsichtlich einer anschtießenden (längeren) Lagerung des Akkumulators unspezifischen Lademodi beziehungsweise Ladezustände insbesondere im Zusammenhang mit Li-Akkumulatoren problematisch sind.

Im Allgemeinen ist davon auszugehen, dass Akkumulatoren (wiederaufladbare Batterien) gleichermaßen im voll- oder teilgeladenen Zustand, aber auch nach vollständiger Entnahme der in den Zellen gespeicherten Energie, gelagert werden können. Die Erfahrung zeigt jedoch, dass insbesondere Li-Ionen Zellen und aus diesen aufgebaute wiederaufladbare Batterien bei Lagerung im (nahezu) voll geladenen Zustand einer stärkeren Alterung unterliegen, als dies bei Lagerung im teilgeladenen oder vollständig entladenen Zustand der Fall ist. Diese Alterung äußert sich in einer Zunahme des Innenwiderstandes der Batterie und einem irreversiblen Verlust von Energiespeicherkapazität der Li-Ionen Batterien.

Vor allem die Lagerung im vollständig geladenen Zustand beschleunigt die Alterung der Li-Ionen Zellen, so dass bereits nach einmonatiger Lagerung eine deutliche Abnahme der Kapazität des Akkumulators auftreten kann. Um diesen Effekt zu vermeiden, werden neu gefertigte Zellen in einem teilgeladenen Zustand gelagert und versandt. Wenn im Gebrauch befindliche Akkupacks absehbar für längere Zeit gelagert werden sollen, gilt es bisher als zweckmäßig, durch Anschalten eines Verbrauchers (Gerät oder externe elektrische Last) an den Li-Ionen-Akku diesen in einen teilgeladenen Zustand zu überführen.

### Offenbarung der Erfindung

Die erfindungsgemäße Ladevorrichtung ist im Anspruch 1 gekennzeichnet. Ein Akkuladesystem mit einer erfindungsgemäßen Vorrichtung ist in Anspruch 10 gekennzeichnet. Weiterbildungen und bevorzugte Maßnahmen ergeben sich aus den Unteransprüchen.

Bei der erfindungsgemäßen Vorrichtung ist, über die gattungsgemäßen Merkmale hinaus, ein Lagerlademodus vorgesehen, bei dessen Aktivierung der Akkumulator für eine absehbare Lagerung des Akkumulators nur bis zu einem vorgegebenen Teilladezustand aufgeladen wird, wobei die Entladevorrichtung den Akkumulator bis zum vorgegebenen Teilladezustand entlädt, wenn der zu Beginn des Lagerlademodus ermittelte Ladezustand höher als der vorgegebene Teilladezustand ist. Der jeweilige Lademodus ist von einem Bediener auswählbar.

Der hinsichtlich einer Lagerung optimierte Teilladezustand ist also, je nach aktuell erfasstem Ladezustand des jeweiligen Akkumulators, entweder durch Laden oder durch Entladen herstellbar. Der erfindungsgemäß hergestellte Teilladezustand ist für die Langzeitlagerung des Akkumulators günstiger als der vollgeladene Zustand, da er mit einer geringeren Alterung auch bei längerer Lagerung einhergeht. Die Erfindung führt demnach zur Verlängerung der Lebensdauer des Akkumulators. Es wird erreicht, dass Akkumulatoren, die nur gelegentlich genutzt werden, bei der Ladung eine größere Energiemenge reversibel aufnehmen können, als dies nach mehrfacher Lagerung im voll geladenen Zustand der Fall wäre. Auf diese Weise wird der ansonsten irreversibel auftretende Kapazitätsverlust durch Lagerung der Batterie im voll geladenen Zustand verhindert. Für diese an einem optimalen Lagerzustand orientierte Entladung ist erfindungsgemäß kein zusätzliches Gerät notwendig. Es ist ebenfalls nicht notwendig, das Gerät, das normalerweise von diesem Akkumulator gespeist wird, allein mit dem Zweck der Entladung des Akkumulators einzuschalten. Von Vorteil ist insbesondere, dass jeweils individuell für eine bestimmte Akkumulator-Zellchemie ein hinsichtlich der Lagerung optimaler Teilladezustand vorgebbar ist. Außerdem kann der Benutzer durch den auswählbaren Lagerlademodus das Ladeverfahren an die eigenen Benutzungsgewohnheiten anpassen.

Die Erfindung ist demnach besonders vorteilhaft bei Ladegeräten für Akkupacks verwendbar, die nicht dauerhaft mit dem zu versorgenden Gerät verbunden sind, sowie bei Akkus, die sich nicht in einem ständigen Einsatz befinden oder die nach einem gelegentlichen Einsatz für längere Zeiten gelagert werden. Derartige Anwendungsbedingungen finden sich typischerweise im Werkzeugverleih, in der Medizintechnik oder im militärischen Bereich. Der Lagerlademodus kann dabei jeweils als einer von diversen Lademodi auswählbar sein.

Besonders bevorzugt ist eine Ausführungsform der Vorrichtung, bei der der Ladezustand von der Einrichtung anhand der Akkumulatorspannung ermittelt wird. Dies ist insbesondere bei Li-Ionen Akkus möglich. Bei anderen Technologien wird der Ladezustand von der Einrichtung durch Auswertung von Informationen ermittelt, die von einer im Akkumulator integrierten Ladezustandselektronik, die den Ladezustand bilanziert, an die Einrichtung übermittelbar sind.

Es ist vorteilhaft, dass die Lademodi neben dem Lagerlademodus zusätzlich einen Schnelllademodus umfassen, bei dem der Akkumulator nur bis zu einem vorgegebenen, hinsichtlich der Ladedauer und der Höhe des dabei erreichbaren Ladezustands optimierten, Teilladezustand geladen wird. Weiterhin kann auch ein Schonlademodus vorgesehen sein, bei dem der Akkumulator bis zu einem Teilladezustand geladen wird, der einen vorgegebenen Abstand zu einem Ladezustand aufweist, bei dem der Akkumulator als vollständig geladen gilt. Von Vorteil ist ferner ein zusätzlicher Überladungslademodus, bei dem der Akkumulator in vorgegebener Höhe über den Ladezustand hinaus, bei dem der Akkumulator als vollständig geladen gilt, aufgeladen wird.

Bei allen Ausführungsformen der Erfindung sind die Lademodi vorteilhaft durch eine Einstelleinheit oder durch Einstecken des Akkumulators in einen für den jeweiligen Lademodus vorgesehenen Ladeschacht manuell auswählbar.

Bei einer vorteilhaften Weiterbildung der bisher genannten Ausführungsformen sind in der erfindungsgemäßen Vorrichtung Mittel zur Erkennung einer am oder im Akkumulator vorhandenen Kodierung vorgesehen, wobei einer Kodierung ein bestimmter Lademodus oder bestimmte Lademodi zugeordnet ist beziehungsweise sind, so dass nur diese Lademodi zum Laden des Akkumulators auswählbar und/oder aktivierbar sind. Die anderen Lademodi, die bei diesem, mit der jeweiligen Kodierung versehenen Akkumulator aus technischen Gründen nicht aktiviert werden dürfen, sind also tatsächlich nicht aktivierbar oder sogar schon nicht auswählbar.

Besonders bevorzugt ist die Ausbildung der erfindungsgemäßen Vorrichtung als selbstständiges Ladegerät. Die Vorrichtung kann jedoch auch im Akkumulator integriert sein.

Das erfindungsgemäße System zum Laden eines Akkumulators umfasst eine Vorrichtung der oben beschriebenen Art sowie einen Akkumulator in einer Technologie, insbesondere in einer Li-Technologie, bei der die Lagerung des in einem nicht optimalen Ladezustand befindlichen Akkumulators zu einer stärkeren Alterung des Akkumulators führt, was durch den Lagerlademodus vermieden wird.

### Kurze Beschreibung der Zeichnungen

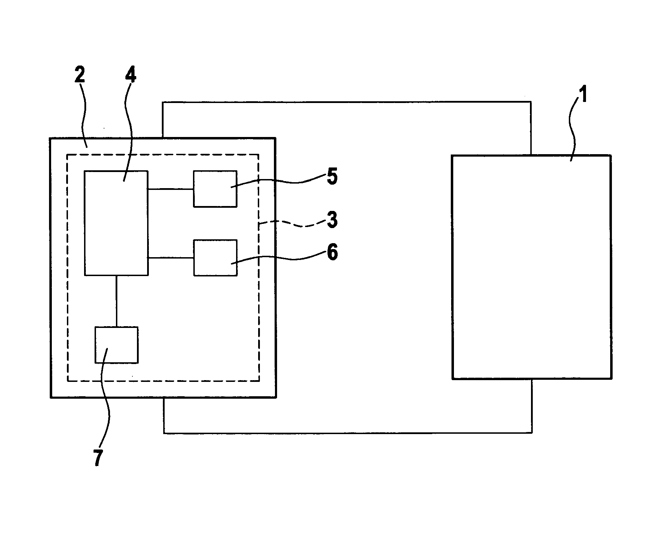

Die einzige Figur zeigt, in schematischer Darstellung anhand eines Schaltbildes, ein Ausführungsbeispiel für ein Akkuladesystem gemäß der Erfindung.

### Ausführungsformen der Erfindung

Unter einer Batterie beziehungsweise einem Akkumulator wird im Folgenden die elektrische Verschaltung von einer oder mehreren wiederaufladbaren Zellen innerhalb eines Batteriegehäuses verstanden. Die beschriebene erfindungsgemäße Ladevorrichtung kann beispielsweise zum Laden von Akkus verwendet werden, die zur Stromversorgung von Elektrowerkzeugen einsetzbar sind.

Die Figur zeigt ein Ausführungsbeispiel der Erfindung. Die beiden Pole der wiederaufzuladenden Li-Ionen Batterie 1 mit einer oder mehreren elektrochemischen Zellen sind, beispielsweise mittels einer (nicht dargestellten) Steckverbindung, mit den komplementären Kontakten des Ladegeräts 2 verbunden. Das Ladegerät 2 selbst wird während des Ladens über nicht dargestellte Ladekontakte mit Ladespannung versorgt, üblicherweise aus dem Netz. Das Ladegerät 2 kann eine Akkuaufnahme aufweisen, in die der Akkumulator 1 zum Laden eingesetzt wird; die Ladevorrichtung kann jedoch auch am beziehungsweise im Akkumulator 1 integriert sein.

Das Ladegerät 2 weist eine Ladegerätvorrichtung 3 auf, die eine Ladestromversorgungseinheit 4, eine Entladevorrichtung 5, eine Einrichtung 6 zur Ermittlung des Ladezustands des Akkus 1 und eine Einstelleinheit 7 umfasst, mittels derer die verschiedenen Lademodi, in denen die Ladestromversorgungseinheit 4 betreibbar ist, manuell auswählbar sind. Die Einstelleinheit 7 kann beispielsweise ein durch einen Drehknopf, einen Schalter, Taster oder eine Tastatur gebildetes Betätigungselement aufweisen. Alternativ weist das Ladegerät 2 mehrere Einsteckmöglichkeiten beziehungsweise Ladeschächte auf, die den verschiedenen Lademodi zugeordnet sind. Das Ladegerät 2 kann noch weitere Elemente, z.B. Anzeigeelemente, Einschalter usw. aufweisen.

Im Folgenden wird die Wirkungsweise dieses Ausführungsbeispiels beschrieben. Die Einrichtung 5 zur Ermittlung des Ladezustands und die Entladevorrichtung 6 sind über die Ladestromversorgungseinheit 4, die typischerweise einen Mikroprozessor zur Steuerung des Ladegeräts 2 umfasst, elektrisch miteinander verbunden.

Normalerweise wird der Akkumulator 1 bis zu einer maximalen Akkumulatorspannung geladen, um die angestrebte hohe Kapazität, bei der der Akku 1 als vollständig (100%) geladen gilt, zu erreichen. Für eine absehbar bevorstehende längere Lagerzeit ist es jedoch günstiger, wenn der Akkumulator 1 nur bis zu einem bestimmten Prozentsatz geladen ist. Einem empirisch festgestellten idealen Lager-Ladezustand von beispielsweise 30% entspricht, bei Li-Ionen Akkus, eine bestimmte zugehörige Akkumulatorspannung des jeweiligen Akkumulators 1, die durch die Einrichtung 5 leicht erfassbar beziehungsweise ermittelbar ist. Bei anderen Akku-Technologien kann eine Ladezustandselektronik im Akku, welche die Ladung/Entladung bilanziert, zur Ermittlung des Füllgrades ausgewertet werden.

Ist eine Lagerung des Akkumulators 1 für den Bediener absehbar, so wählt dieser über das Betätigungselement den Lagerlademodus aus. Sobald der Lagerlademodus aktiviert ist, hängt der weitere Verlauf des Ladevorgangs vom aktuellen Ladezustand des Akkus 1 und vom als optimal für die Lagerung vorgegebenen Teilladezustand ab. Ist der Akkumulator 1 bei Beginn des Lagerlademodus nur zu einem Teil, beispielsweise 10% geladen, und ist ein für die Lagerung optimaler Teilladezustand von 30% vorgegeben, so beginnt die Ladestromversorgungseinheit 4 mit der Aufladung, die fortgesetzt wird, bis die von der Einrichtung 5 erfasste Akkumulatorspannung den Wert annimmt, der dem Ladezustand 30% entspricht. Ist andererseits der Akkumulator 1 bei Beginn des Lagerlademodus noch oberhalb des vorgegebenen Prozentsatzes (Ladezustand) für den Lagerlademodus geladen, so wird der Akkumulator 1 mit Hilfe der Entladevorrichtung 6 bis auf den vorgegebenen Prozentsatz (hier: 30%) entladen.

Zusätzlich zu einem Standardlademodus und zum Lagerlademodus kann ein Schnelllademodus im Ladegerät 2 implementiert werden. Bei Auswahl dieses Lademodus wird der Akkumulator 1 schnell auf einen bestimmten Prozentsatz, beispielsweise 70%, geladen. Dies ist z.B. bei Li-Ionen- oder Blei-Akkus vorteilhaft, wo eine vollständige Ladung aufgrund des bei Erreichen eines hohen Füllgrades geringer werdenden Ladestromes eine sehr lange Zeit dauern kann. Zusätzlich oder alternativ ist ein Schonlademodus vorsehbar, bei dem der Akkumulator 1 - in Abhängigkeit von der Zellentechnologie - nicht vollständig, also z.B. nur zu 90% geladen wird. In Abhängigkeit von der Akku-Technologie sind auch weitere Lademodi möglich, z.B. eine Überladung über die 100% hinaus, wobei die übergroße Kapazität aber mit dem Nachteil einer reduzierten Lebensdauer erkauft wird.

Darf im Übrigen ein bestimmter Akkutyp nur mit einem bestimmten Lademodus oder nur mit bestimmten Lademodi geladen werden, so kann dies über eine am oder im Akku 1 vorhandene, z.B. mechanisch oder elektronisch ausgebildete, Kodierung vom Ladegerät 2 erkannt werden.

Die Funktionen der beschriebenen Prinzipschaltung lassen sich in die bekannten IC-Schaltungen, die zur Überwachung des Betriebes von Ladevorrichtungen dienen, inkorporieren.

## Patentansprüche

1. Vorrichtung, insbesondere Ladegerätvorrichtung (3), zum Laden eines Akkumulators (1), mit einer Ladestromversorgungseinheit (4), die in mehreren Lademodi betreibbar ist, und mit einer für mindestens einen der Lademodi vorgesehenen Entladevorrichtung (6), wobei eine Einrichtung (5) zur Ermittlung des Ladezustands des Akkumulators (1) vorgesehen ist, **dadurch gekennzeichnet, dass** der jeweilige Lademodus voreinem Bediener auswählbar ist, und dass ein Lagerladamodus vorgesehen ist, bei dessen Aktivierung der Akkumulator (1) für eine absehbare Lagerung des Akkumulators nur bis zu einem vorgegebenen Teilladezustand aufgeladen wird, wobei die Entladevorrichtung (6) den Akkumulator (1) bis zum vorgegebenen Teilladezustand entlädt, wenn der zu Beginn des Lagerlademodus ermittelte Ladezustand höher als der vorgegebene Teilladezustand ist.

2. Vorrichtung nach Anspruch 1, **dadurch gekennzeichnet, dass** der Ladezustand von der Einrichtung (5) anhand der Akkumulatorspannung ermittelt wird.

3. Vorrichtung nach Anspruch 1, **dadurch gekennzeichnet, dass** der Ladezustand von der Einrichtung (5) durch Auswertung von Informationen ermittelt wird, die von einer im Akkumulator (1) integrierten Ladezustandselektronik, die den Ladezustand bilanziert, an die Einrichtung (5) übermittelbar sind.

4. Vorrichtung nach einem der Ansprüche 1 bis 3, **dadurch gekennzeichnet, dass** die Lademodi zusätzlich einen Schnelllademodus umfassen, bei dem der Akkumulator (1) nur bis zu einem vorgegebenen Teilladezustand geladen wird, der hinsichtlich der Ladedauer und der Höhe des dabei erreichbaren Ladezustands optimiert ist.

5. Vorrichtung nach einem der Ansprüche 1 bis 4, **dadurch gekennzeichnet, dass** die Lademodi zusätzlich einen Schonlademodus umfassen, bei dem der Akkumulator (1) bis zu einem Teilladezustand geladen wird, der einen vorgegebenen Abstand zu einem Ladezustand aufweist, bei dem der Akkumulator (1) als vollständig geladen gilt.

6. Vorrichtung nach einem der Ansprüche 1 bis 5, **dadurch gekennzeichnet, dass** die Lademodi zusätzlich einen Überladungslademodus umfassen, bei dem der Akkumulator (1) in vorgegebener Höhe über den Ladezustand hinaus, bei dem der Akkumulator (1) als vollständig geladen gilt, aufgeladen wird.

7. Vorrichtung nach einem der Ansprüche 1 bis 6, **dadurch gekennzeichnet, dass** die Lademodl durch eine Einstelleinheit (7) oder durch Einstecken des Akkumulators (1) In einen für den jeweiligen Lademodus vorgesehenen Ladeschacht manuell auswählbar sind.

8. Vorrichtung nach einem der Ansprüche 1 bis 7, **dadurch gekennzeichnet, dass** Mittel zur Erkennung einer am oder im Akkumulator (1) vorhandenen Kodierung vorgesehen sind, und dass einer Kodierung ein bestimmter Lademodus oder bestimmte Lademodi zugeordnet ist beziehungsweise sind, so dass nur diese Lademodi zum Laden des Akkumulators (1) auswählbar und/oder aktivierbar sind.

9. Ladegerät (2) mit einer Vorrichtung nach einem der vorhergehenden Ansprüche.

10. System zum Laden eines Akkumulators (1), mit einer Vorrichtung nach einem der Ansprüche 1 bis 8, bei dem der Akkumulator (1) in einer Technologie, insbesondere in einer Li-Technologie, realisiert ist, bei der die Lagerung des in einem nicht optimalen Ladezustand befindlichen Akkumulators (1) zu einer stärkeren Alterung des Akkumulators (1) führt.

## Claims

1. Apparatus, in particular a charging apparatus (3), for charging a rechargeable battery (1), having a charging current supply unit (4) which can be operated in a plurality of charging modes, and having a discharge apparatus (6), which is provided for at least one of the charging modes, wherein a device (5) is provided for determining the state of charge of the rechargeable battery (1), **characterized in that** the respective charging mode can be selected by a user, and **in that** a storage charging mode is provided, on whose activation the rechargeable battery (1) is charged up to a predetermined partial state of charge for intended storage of the rechargeable battery, with the discharge apparatus (6) discharging the rechargeable battery (1) to the predetermined partial state of charge if the state of charge determined at the start of the storage charging mode is higher than the predetermined partial state of charge.

2. Apparatus according to Claim 1, **characterized in that** the state of charge is determined by the device (5) on the basis of the rechargeable battery voltage.

3. Apparatus according to Claim 1, **characterized in that** the state of charge is determined by the device (5) by evaluation of information which can be transmitted to the device (5) from state of charge electronics which are integrated in the rechargeable battery (1) and balance the state of charge.

4. Apparatus according to one of Claims 1 to 3, **characterized in that** the charging modes additionally comprise a rapid charging mode, in which the rechargeable battery (1) is charged only up to a predetermined partial state of charge, which is optimized for the charge duration and the level of the state of charge which can be achieved in this case.

5. Apparatus according to one of Claims 1 to 4, **characterized in that** the charging modes additionally comprise a conservation charging mode, in which the rechargeable battery (1) is charged up to a partial state of charge, which is separated by a predetermined amount from a state of charge in which the rechargeable battery (1) is considered to be completely charged.

6. Apparatus according to one of Claims 1 to 5, **characterized in that** the charging modes additionally comprise an overcharging charging mode, in which the rechargeable battery (1) is charged by a predetermined amount above the state of charge at which the rechargeable battery (1) is considered to be completely charged.

7. Apparatus according to one of Claims 1 to 6, **characterized in that** the charging modes can be selected manually by means of a setting unit (7) or by plugging the rechargeable battery (1) into a charging compartment which is provided for the respective charging mode.

8. Apparatus according to one of Claims 1 to 7, **characterized in that** means are provided for identification of a coding which is provided on or in the rechargeable battery (1) and **in that** a specific charging mode or specific charging modes is or are allocated to a coding, such that only these charging modes can be selected and/or activated for charging the rechargeable battery (1).

9. Charger (2) having an apparatus according to one of the preceding claims.

10. System for charging a rechargeable battery (1), having an apparatus according to one of Claims 1 to 8, in which the rechargeable battery (1) is designed using a technology, in particular a lithium technology, in which the storage of the rechargeable battery (1) when not in an optimum state of charge leads to increased ageing of the rechargeable battery (1).

## Revendications

1. Appareil, en particulier appareil de charge (3) destiné à charger un accumulateur (1) et présentant
une unité (4) d'alimentation en courant de charge qui peut fonctionner en plusieurs modes de charge et
un dispositif de décharge (6) prévu pour au moins l'un des modes de charge, un dispositif (5) de détermination de l'état de charge de l'accumulateur (1) étant prévu,
**caractérisé en ce que**
chaque mode de charge peut être sélectionné par un opérateur,
**en ce qu'**il présente un mode de charge d'entreposage qui, lorsqu'il est activé, charge l'accumulateur (1) pour un entreposage prévisible de l'accumulateur uniquement jusqu'à un état partiel de charge prédéterminé et
**en ce que** le dispositif de décharge (6) décharge l'accumulateur (1) jusqu'à l'état de charge partielle prédéterminé si l'état de charge déterminé au début du mode de charge d'entreposage est supérieur à l'état de charge partielle prédéterminé.

2. Appareil selon la revendication 1, **caractérisé en ce que** l'état de charge du dispositif (5) est déterminé à l'aide de la tension aux bornes de l'accumulateur.

3. Appareil selon la revendication 1, **caractérisé en ce que** l'état de charge du dispositif (5) est déterminé par évaluation d'informations qui peuvent être transmises au dispositif (5) par une électronique d'état de charge intégrée au commutateur (1) et qui détermine l'état de charge.

4. Appareil selon l'une des revendications 1 à 3, **caractérisé en ce que** les modes de charge comprennent de plus un mode de charge rapide dans lequel l'accumulateur (1) n'est chargé que jusqu'à un état de charge partielle prédéterminé optimisé en termes de durée de charge et du niveau de l'état de charge que cette durée permet d'atteindre.

5. Appareil selon l'une des revendications 1 à 4, **caractérisé en ce que** les modes de charge comprennent en outre un mode de charge modéré dans lequel l'accumulateur (1) est chargé jusqu'à un état de charge partielle qui présente un écart prédéterminé par rapport à un état de charge dans lequel l'accumulateur (1) est considéré comme complètement chargé.

6. Appareil selon l'une des revendications 1 à 5, **caractérisé en ce que** les modes de charge comprennent de plus un mode de charge en surcharge dans lequel l'accumulateur (1) est chargé jusqu'à un niveau prédéterminé au-dessus de l'état de charge pour lequel l'accumulateur (1) est considéré comme étant complètement chargé.

7. Appareil selon l'une des revendications 1 à 6, **caractérisé en ce que** les modes de charge peuvent être sélectionnés manuellement par une unité de réglage (7) ou par enfichage de l'accumulateur (1) dans un compartiment de charge prévu pour chaque mode de charge.

8. Appareil selon l'une des revendications 1 à 7, **caractérisé en ce qu'**il présente des moyens de détection d'un code prévu sur ou dans l'accumulateur (1) et **en ce qu'**un mode de charge défini ou des modes de charge définis sont associés à un code, de sorte que seuls ces mode de charge peuvent être sélectionnés et/ou activés pour charger l'accumulateur (1).

9. Appareil de charge (2) doté d'un dispositif selon l'une des revendications précédentes.

10. Système de charge d'un accumulateur (1) doté d'un dispositif selon l'une des revendications 1 à 8, dans lequel l'accumulateur (1) est réalisé en une technologie, en particulier une technologie au Li, pour laquelle l'entreposage de l'accumulateur (1) placé dans un état de charge non optimal entraîne un vieillissement accéléré de l'accumulateur (1).
